# EUROPEAN PATENT APPLICATION

(11) **EP 4 171 157 A1**
(43) Date of publication of application: **26.04.2023**
(21) Application number: 20942040.5
(22) Date of filing: 17.07.2020
(51) Int. Cl.: H04W 74/08

(54) **MULTI-LINK WLAN NETWORK COMPETITION ACCESS METHOD AND APPARATUS, AND TERMINAL**

(30) Priority: 23.06.2020 CN 202010578397
(71) Applicant: XGIMI Technology Co., Ltd., Chengdu, Sichuan 610000 (CN)
(72) Inventor: WU, Hao, Chengdu, Sichuan 610041 (CN)
(74) Representative: Casalonga
(86) International application number: PCT/CN2020/102720
(87) International publication number: WO 2021/258438

(57) **Abstract**

This present disclosure discloses a method for competitively accessing a multi-link WLAN network and apparatus, a terminal and a storage medium. The method includes: monitoring whether links are idle; in a case that a first link is idle, performing a random backoff process on the first link after interframe space period, and starting to transmit data on the first link when the backoff process is ended; and in a case that other links are idle before the first link finishes data transmission, setting TXOP of other links according to TXOP of the first link and time when data transmission starts, and transmitting data on other links. This application sets TXOP of other links except the first link according to TXOP of the first link and time when data transmission starts, and realizes synchronous transmission and obtains a high data throughput rate by making the links finish data transmission at the same time.

## Description

### Technical Field

This disclosure relates to the field of wireless communication, and more particularly relates to a method and device for competitively accessing a multi-link WLAN network, a terminal and a storage medium.

### Background

An 802.11 be network also known as an Extremely High Throughput (EHT) network achieves extremely high throughput through a series of system characteristics and multiple mechanism enhancements. Along with sustainable growth of usage of a Wireless Local Area Network (WLAN), it is more and more important to provide wireless data services in many environments (e.g., homes, enterprises and hotspots). Particularly, video traffic will still be a main traffic type in many WLAN deployments. Since 4k and 8k videos appear (an uncompressed rate of 20Gbps), throughput demands of the applications continuously grow. Like novel high throughput from virtual reality, or augmented reality, games, remote office and cloud computing, low-latency applications will surge (e.g., latency of real-time games being less than 5 ms).

In view of the high throughput and strict real-time latency demands of the applications, when users expect to support the applications through WLAN, throughput is higher, reliability is higher, latency and shake are less, and power-supply efficiency is higher. The users expect to improve integration with Time-Sensitive Networking (TSN) so as to support applications on heterogeneous Ethernet and a wireless Local Area Network (LAN). The 802.11 be network aims to ensure, by further improving total throughput and reducing latency, WLAN competitiveness and backward compatibility and coexistence with old-version technical standards. 802.11 running on frequency bands: 2.4GHz, 5GHz and 6GHz are compatible with devices.

To achieve above goals in the 802.11be network, establishing a plurality of data transmission links between a terminal and an access point is proposed, and the plurality of links are adopted for synchronous transmission so as to increase a transmission rate.

### Summary

An 802.11 be network has an important characteristic that a plurality of links can be used between a terminal Station (STA) and an Access Point (AP)for transmitting data at the same time. But due to characteristics of a wireless network, there is interference between adjacent carrier waves, the AP is commonly provided with a plurality of transmitting and receiving antennas which are high in modulating and demodulating capability and power and capable of simultaneously and independently performing receiving and transmitting on different links while the terminal cannot be provided with more transmitting and receiving antennas due to limited volumes, power, etc., commonly has the plurality of links for simultaneous transmitting or receiving and cannot perform operation that one link performs transmitting and other links simultaneously perform receiving, and thus, a data transmitting throughput rate of the terminal can be increased by performing synchronous transmitting on the plurality of links, and accordingly a high data throughput rate can be obtained.

To achieve synchronous transmission, this disclosure provides following solutions.

In the first aspect, embodiments of the disclosure provide a method for competitively accessing a multi-link WLAN network. The method for competitively accessing a multi-link WLAN network includes: it is monitored whether links are idle; in a case that a first link is idle, a random backoff process is performed on the first link after interframe space period, and it is started to transmit data on the first link when the backoff process is ended; and in a case that other links are idle before the first link finishes data transmission, Transmit Opportunity (TXOP) of other links is set according to TXOP of the first link and time when data transmission starts, and data is transmitted on other links.

In some alternative embodiments, the step of setting TXOP of other links according to TXOP of a first link and time when data transmission starts, and transmitting data on other links includes: idle state of other links is monitoring; in a case that other links are kept in an idle state after interframe space period, a random backoff process is performed on other links; and in a case that data are transmitted on the first link after the backoff process is ended, a TXOP duration is set on other links as a residual value of a TXOP duration on the first link, and data transmission is started on other links.

In some alternative embodiments, the step of setting TXOP of other links according to TXOP of a first link and time when data transmission starts, and transmitting data on other links includes: monitoring idle state of other links; and in a case that data are transmitted on the first link after interframe space period, a TXOP duration is set on other links as a residual value of a TXOP duration on the first link, and data transmission is started on other links.

In some alternative embodiments, the step of setting TXOP of other links according to TXOP of a first link and time when data transmission starts, and transmitting data on other links includes: in a case that other links perform a random backoff process when a random backoff process of the first link is ended, the backoff process is directly ending on other links, a TXOP duration is set on other links to be the same with a TXOP duration on a reference link, and data transmission is started on other links.

Alternatively, a method for setting a TXOP duration on a first link includes: setting the TXOP duration on the first link to be a TXOPLimit value, or to be determined by TXOPLimit and a size of a to-be-transmitted data packet.

In the second aspect, the embodiments of this disclosure provide another method for competitively accessing a multi-link WLAN network. The method for competitively accessing a multi-link WLAN network includes: it is monitored whether links are idle; in a case that a current link is idle, a random backoff process is performed on the current link after interframe space period, and it is started to transmit data on the current link when the backoff process is ended; and in a case that other links are idle when the random backoff process of the current link is ended, TXOP of other links is set, and data is transmitted on other links .

In some alternative embodiments, the step of setting TXOP of other links and transmitting data on other links includes: in a case that other links perform a random backoff process when a random backoff process of a current link is ended, the backoff process is directly ending on other links, a TXOP duration is set on other links to be the same with a TXOP duration on the current link, and data is started transmission on other links.

In the third aspect, this disclosure provides another method for competitively accessing a multi-link WLAN network. The method for competitively accessing a multi-link WLAN network includes: monitoring whether links are idle; in a case that a current link is idle, it is detected whether data are transmitted on a first link or not; in a case that yes, TXOP of the current link is set according to TXOP of the first link and time when data transmission starts, and data is transmitted on the current link.

In some alternative embodiments, the step of setting TXOP of a current link according to TXOP of a first link and time when data transmission starts, and transmitting data on the current link includes: it is monitored idle time of the current link, a random backoff process is performed on the current link after interframe space period, data is started transmission on the current link when the backoff process is ended, and a TXOP duration is set on the current link as a residual value of a TXOP duration on the first link.

In some alternative embodiments, the step of setting TXOP of a current link according to TXOP of a first link and time when data transmission starts, and transmitting data on the current link includes: idle time of the current link is monitored, data transmission is started on the current link after interframe space period, and a TXOP duration is set on the current link as a residual value of a TXOP duration on the first link.

In the fourth aspect, this embodiments of the disclosure provide a device for competitively accessing a multi-link WLAN network, including a monitor component and a synchronization unit. The monitor component is configured to monitor whether links are idle. The synchronization component is configured to perform a random backoff process on a first link after interframe space period in a case that the first link is idle, and start data transmission on the first link when the backoff process is ended; and to set TXOP of other links according to TXOP of the first link and time when data transmission starts and transmit data on other links in a case that other links are idle before the first link finishes data transmission.

In some alternative embodiments, the operation that a synchronization component sets TXOP of other links according to TXOP of a first link and time when data transmission starts and transmits data on other links includes one or more following items:
monitoring idle state of other links, in a case that other links are kept in an idle state after interframe space period, performing a random backoff process on other links, and in a case that data are transmitted on the first link after the backoff process is ended, setting a TXOP duration on other links as a residual value of a TXOP duration on the first link, and starting data transmission on other links;
monitoring idle state of other links, in a case that data are transmitted on the first link after interframe space period, setting a TXOP duration on other links as a residual value of a TXOP duration on the first link, and starting data transmission on other links; and
in a case that other links perform a random backoff process when a random backoff process of the first link is ended, directly ending a backoff process on other links, setting a TXOP duration on other links to be the same with a TXOP duration on a reference link, and starting data transmission on other links.

In the fifth aspect, the embodiment of the disclosure provides a terminal including a memory and a processor. The memory is configured to store programs. The processor is coupled to the memory, where the processor is configured to operate the programs so that the terminal can perform any one of the first aspect, the second aspect and the third aspect or any method for competitively accessing a multi-link WLAN network in a possible implementation mode in any of the first aspect, the second aspect and the third aspect.

In the sixth aspect, this disclosure provides a computer-readable storage medium including computer instructions. When the computer instructions run on a terminal, the terminal can perform any one of the first aspect, the second aspect and the third aspect or any method for competitively accessing a multi-link WLAN network in a possible implementation mode in any of the first aspect, the second aspect and the third aspect.

This disclosure sets TXOP of other links except the first link according to TXOP of the first link and time when data transmission starts, and realizes synchronous transmission and obtains a high data throughput rate by making the links finish data transmission at the same time.

### Brief Description of the Drawings

This disclosure is described by referring to drawings according to embodiments, where:
Fig. 1 is a scene schematic diagram of multi-link WLAN network competition access according to an embodiment of this disclosure;
Figs. 2A-2B show another scene schematic diagram of multi-link WLAN network competition access according to an embodiment of this disclosure;
Figs. 3A-3B show another scene schematic diagram of multi-link WLAN network competition access according to an embodiment of this disclosure;
Fig. 4 is another scene schematic diagram of multi-link WLAN network competition access according to an embodiment of this disclosure; and
Fig. 5 is another scene schematic diagram of multi-link WLAN network competition access according to an embodiment of this disclosure.

### Detailed Description of the Embodiments

Technical schemes in this disclosure are described by combining drawings below.

In embodiments of this disclosure, "exemplarily", "for example", etc. are used for exampling, illustration or explanation. It is unacceptable that any embodiment or design scheme described as an example in this disclosure is explained to be more preferable than or have more advantages than other embodiments or design schemes. Exactly, the word "example" is used for presenting a concept in a specific way.

Except additional definitions, technical terms or scientific terms used in this disclosure have ordinary meanings understood by persons with general skills in the art of this disclosure. "First", "second" and similar words used in this disclosure are merely used for distinguishing descriptions instead of representing any sequence, number or importance. "Comprise" or "include" or other similar words aim to indicate that elements or objects appearing in front of the word cover elements or objects or the same listed behind the word while other elements or objects are not excluded. A term "and/or" includes any one and all combinations of one or more associated listed items.

To make purposes, the technical schemes and advantages of this disclosure more clearly understood, this disclosure is further described in detail by combining specific embodiments as below. It is to be understood that the specific embodiments described herein are merely used for explaining this disclosure rather than limit this disclosure.

An 802.11be network has an important characteristic that a plurality of links can be used between a terminal Station (STA) and an Access Point (AP)for transmitting data at the same time. But due to characteristics of a wireless network, there is interference between adjacent carrier waves, the AP is commonly provided with a plurality of transmitting and receiving antennas which are high in modulating and demodulating capability and power and capable of simultaneously and independently performing receiving and transmitting on different links while the terminal cannot be provided with more transmitting and receiving antennas due to limited volumes, power, etc., commonly has the plurality of links for simultaneous transmitting or receiving and cannot perform operation that one link performs transmitting and other links simultaneously perform receiving, and thus, a data transmitting throughput rate of the terminal can be increased by performing synchronous transmitting on the plurality of links, and accordingly a high data throughput rate can be obtained.

In the following embodiments, this disclosure is described based on two links while a scene with more than two links in an implementation process is not limited. All operations on a second link can be expanded into operations on a third link, a fourth link, etc.

A terminal MLD refers to a terminal with a multi-link capability and includes two STAs, where STA1 receives and transmits data on link1, and STA2 receives and transmits data on link2. Herein, link1 and link2 are identifications of the links, and the links are wireless resources for data transmission.

A method for competitively accessing a multi-link WLAN network according to the embodiment of this disclosure includes: monitor whether links are idle; in a case that a first link is idle, perform a random backoff process on the first link after interframe space period, and start to transmit data on the first link when the backoff process is ended; and in a case that other links are idle before the first link finishes data transmission, set TXOP of other links according to TXOP of the first link and time when data transmission starts, and transmit data on other links .

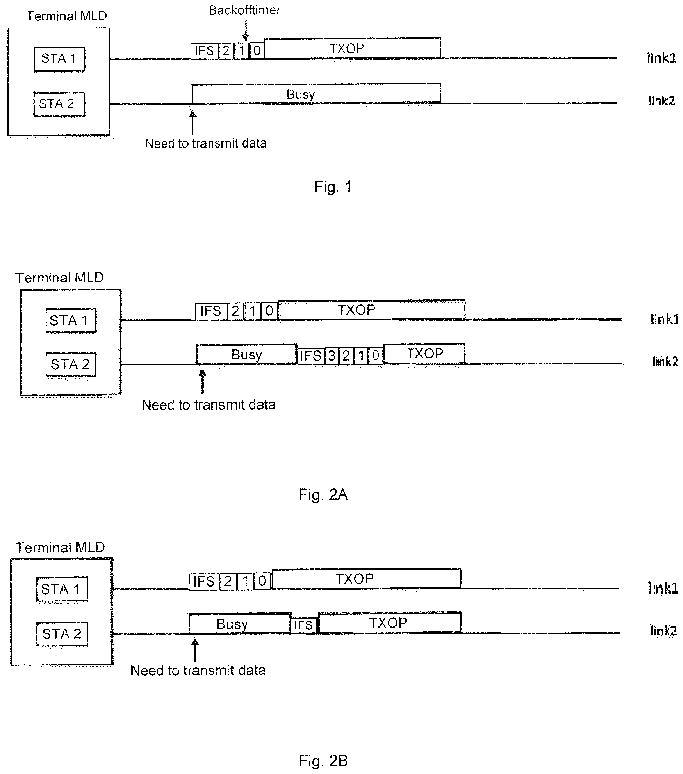

Fig. 1 is a scene schematic diagram of multi-link WLAN network competition access according to an embodiment of this disclosure. As shown in Fig. 1, link1 is idle, and link2 is busy. When data are transmitted on link1, link2 is busy all the time, is not particularly operated, and is not utilized for synchronous data transmission.

Figs. 2A-2B show another scene schematic diagram of multi-link WLAN network competition access according to an embodiment of this disclosure. As shown in Figs. 2A-2B, link1 is idle, and link2 is busy. After a backoff timer of link1 times out, link2 is busy, data transmission on link1 is ended, and link2 is idle.

As shown in Fig. 2A, a method for competitively accessing a multi-link WLAN network includes:
1: Monitor whether link1 and link2 are idle when a terminal with a multi-link capability needs to transmit data.
2: In a case that link1 is idle, start, by the terminal, an IFS timer on link1 with a preset value, and in a case that the IFS timer on link1 times out, keep a channel on the link in an idle state, and start a backoff timer on link1. A manner for setting a value of the backoff timer on link1 includes: select, by the terminal, a random number as the value of the backoff timer on link1 according to a Contention window. For example, an initial contention window is 31, namely, one random number is selected in [0, 31] as the value of the backoff timer on link1, and a unit of the value of the backoff timer on link1 is one slot time. Slot time is a preset unit of time. For example, one slot time is set as 5 ms, 9 ms, 20 ms, etc.
3: Monitor, by the terminal, the channel on link1 one time at every slot time, and in a case that the channel is idle, subtract one from the value of backoff timer on link1.
4: When the value of the backoff timer on link1 is 0, start a TXOP timer on link1 by the terminal, and start to transmit data on link1. A value of the TXOP timer on link1 is set to be a value of TXOPLimit or determined by TXOPLimit and a size of a to-be-transmitted data packet, where TXOPLimit is transmitted by a network access point via a broadcast message. For example, time t1 for transmission is calculated according to the size of the to-be-transmitted data packet. In a case that the time is less than the value of TXOPLimit, the time is set as t1. In a case that the time is greater than or equal to the value of TXOPLimit, the time is set as TXOPLimit.
5: In a case that link2 is idle, start, by the terminal, an IFS timer on link2, in a case that the IFS timer on link2 times out, keep a channel on the link in an idle state, and then start a backoff timer on link2, where a manner for setting a value of the backoff timer on link2 is the same with the manner in the Step 2.
6: When the value of the backoff timer on link2 is 0 and data are transmitted on link1 , start a TXOP on link2, and start to transmit data on link2. The value of the TXOP on link2 is set as a residual value of the TXOP on link1, which aims to make data transmission on link1 and link2 ended at the same time.

Where, operations on link2 include: monitor whether links are idle; in a case that a current link is idle, detect whether data are transmitted on link1 or not, and in a case that yes, set TXOP of the current link according to TXOP of link1 and time when data transmission starts, and start to transmit data on the current link. Exemplarily, the step of setting TXOP of a current link and transmitting data on the current link includes: monitor idle time of the current link, perform a random backoff process on the current link after interframe space period, start to transmit data on the current link after the backoff process is ended, and set a TXOP duration on the current link as a residual value of a TXOP duration on link1, where the residual value of the TXOP duration on link1=(the TXOP duration on link1)-(a time duration from data transmission starting time on link1 to ending time of the backoff process on link2).

As shown in Fig. 2B, a method for competitively accessing a multi-link WLAN network includes:
Steps 1-4 which are the same with steps of the method involved in the embodiment shown in Fig. 2A.

5: In a case that link2 is idle, start, by the terminal, an IFS timer on link2, and when the IFS on link2 times out and data are transmitted on link1, start a TXOP on link2, and start to transmit data on link2. A value of the TXOP timer on link2 is set as a residual value of the TXOP on link1, which aims to make data transmission on link1 and link2 ended at the same time.

Where, operations on link2 include: monitor whether links are idle; in a case that a current link is idle, detect whether data are transmitted on link1 or not, and in a case that yes, set TXOP of the current link according to TXOP of link1 and time when data transmission starts, and start to transmit data on the current link. Exemplarily, the step of setting TXOP of a current link and transmitting data on the current link includes: monitor idle time of the current link, start to transmit data on the current link after interframe space period, and set a TXOP duration on the current link as a residual value of a TXOP duration on link1, where the residual value of the TXOP duration on link1=(the TXOP duration on link1)-(a time duration from data transmission starting time on link1 to time after waiting for interframe space period on link2).

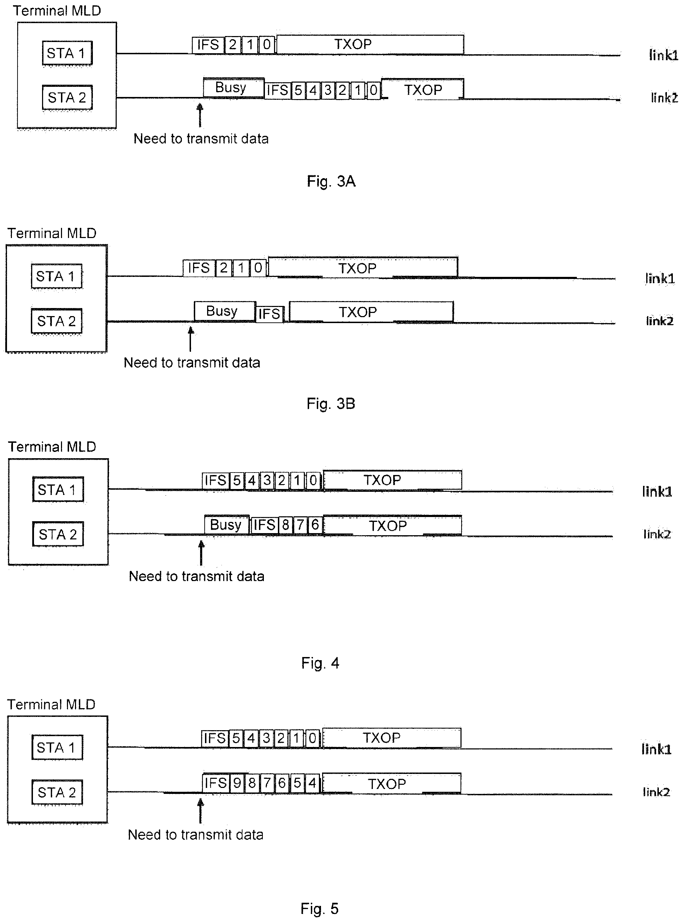

Figs. 3A-3B show another scene schematic diagram of multi-link WLAN network competition access according to an embodiment of this disclosure. As shown in Figs. 3A-3B, link1 is idle, and link2 is busy; and after a backoff timer of link1 times out, link2 is idle and is in an IFS stage.

As shown in Fig. 3A, link2 needs to set TXOP according to TXOP of link1 and time when data transmission starts, and a specific method is the same with the method involved in the embodiment shown in Fig. 2, which is not repeated herein.

As shown in Fig. 3B, after link2 waits for an IFS, in a case that a channel is idle and data are transmitted on link1, the backoff timer is not started, data are directly transmitted, and TXOP is set according to TXOP of link1 and time when data transmission starts. A specific method is the same with the method involved in the embodiment shown in Fig. 2B, which is not repeated herein.

Fig. 4 is another scene schematic diagram of multi-link WLAN network competition access according to an embodiment of this disclosure. As shown in Fig.4, link1 is idle, and link2 is busy; and after a backoff timer of link1 times out, link2 is idle, and the backoff timer is not over yet.

As shown in Fig. 4, a method for competitively accessing a multi-link WLAN network includes:
Steps 1-4 which are the same with steps of the method involved in the embodiment shown in Fig. 2A.

5: When data transmission starts on link1, a backoff timer on link2 runs and it is detected that a channel on link2 is idle, reset the backoff timer on link2, start a TXOP on link2, and start to transmit data on link2. A value of the TXOP timer on link2 is set to be the same with the value of the TXOP timer on link1.

Operations on link1 include: monitor whether links are idle; in a case that a current link is idle, perform a random backoff process on the current link after interframe space period, and start to transmit data on the current link when the backoff process is ended; and in a case that link2 is idle when the random backoff process of the current link is ended, set TXOP of link2, and transmit data on link2. Exemplarily, the step of setting TXOP of link2, and transmitting data on link2 includes: when a random backoff process of a current link is ended and a random backoff process is performed on link2, inform link2 to directly end the backoff process, set a TXOP duration on link2 to be the same with a TXOP duration on the current link, and start to transmit data on link2.

Fig. 5 is another scene schematic diagram of multi-link WLAN network competition access according to an embodiment of this disclosure. As shown in Fig.5, link1 and link2 are idle and respectively operate backoff timers, and after the backoff timer of link1 times out, the backoff timer of link2 does not time out. In a case that a channel is idle after the backoff timer of link1 times out, link2 resets the backoff timer and synchronously transmits data with link1. A specific method is the same with the method involved in the embodiment shown in Fig. 4, which is not repeated herein.

In the above embodiment, link1 is idle more earlier than link2, and thus, TXOP of link2 is set according to TXOP of link1 and time when data transmission starts. In some other embodiments, in a case that link2 is idle more earlier than link1, TXOP of link1 is set according to TXOP of link2 and time when data transmission starts.

In a scene with more than two links, the method for competitively accessing a multi-link WLAN network of this disclosure is further described by taking an example of setting TXOP of other links according to TXOP of link1 and time when data transmission starts. At the time, many other links exist except link1, and TXOP of other links except link1 is set according to states of other links. For example, a state of a first other link is shown in the scene in Figs.2A-2B, and thus, a method for setting TXOP of the first other link is the same with the method involved in the embodiment shown in Fig. 2A or Fig. 2B; a state of a second other link is shown in the scene in Figs.3A-3B, and thus, a method for setting TXOP of the second other link is the same with the method involved in the embodiment shown in Fig. 3A or Fig. 3B; a state of a third other link is shown in the scene in Fig. 4, and thus, a method for setting TXOP of the third other link is the same with the method involved in the embodiment shown in Fig. 4; and in a similar way, TXOP of other links except link1 is independently set.

In some embodiments, link1 may be a preset main transmission link relative to link2. Assuming that a terminal MLD only has two STAs, where, STA1 receives and transmits data on link1, STA2 receives and transmits data on link2, and at the time, link1 may be defined as a link starting to transmit data before relative to Iink2. There are many methods for setting the main transmission link, which are not limited by this disclosure. Exemplarily, the main transmission link may be set according to interactive messages including corresponding parameters between a message initiator and a message responder. For example, a feedback connection response message or a re-connection response message of the message responder including a parameter Primary link indicates the main transmission link in multi-link operation, and a connection request message or a re-connection request message of the message initiator including a parameter Primary link indicates the main transmission link expected to be used.

The embodiment of this disclosure further provides a device for competitively accessing a multi-link WLAN network. A method for competitively accessing a multi-link WLAN network involved in any embodiment in Figs. 1-5 is realized by the apparatus, or hardware, or the hardware performing corresponding software. The hardware or the software includes one or more units corresponding to above functions, such as a monitor component and a synchronization unit.

The embodiment of this disclosure further provides a terminal including a memory and a processor. The memory is configured to store programs. The processor is coupled to the memory, where the processor is configured to operate the programs so that the multi-link terminal can perform a method involved in any embodiment in Figs. 1-5.

The embodiment of this disclosure further provides a computer-readable storage medium including computer instructions. When the computer instructions run on a terminal, the terminal can perform a method involved in any embodiment in Figs. 1-5.

It is to be understood that in various embodiments of this disclosure, the serial numbers of the above processes do not mean an execution sequence, part or all of the steps may be executed in parallel or in sequence, and the execution sequence of various processes is determined according to functions and internal logics, which cannot limit an implementation process of the embodiments of this disclosure.

Those ordinarily skilled in the art can know that units or algorithm steps in various examples described in embodiments disclosed in the Description may be realized by electronic hardware or combination of computer software and the electronic hardware. Performing the functions in a hardware manner or a software manner is decided by specific disclosures and design constraint conditions of the technical schemes. Professionals may use different methods for realizing functions described by each specific disclosure, which cannot exceed the scope of this disclosure.

Those skilled in the art may clearly know that to facilitate and simplify descriptions, the above described specific apparatus and unit work processes may refer to corresponding processes in the embodiments of the method, which are not repeated herein.

It is to be understood that apparatuses and methods disclosed by the several embodiments provided by this disclosure may be realized by other manners. For example, the above described apparatus embodiments are merely schematic, such as unit division which is merely logic function division, and during practical implementation, there may be additional division manners. For example, a plurality of units or assemblies may be combined or integrated into another system, or some characteristics may be ignored or not executed. In addition, shown or discussed mutual coupling or direct coupling or communication connection may be realized through some interfaces, and apparatus or unit indirect coupling or communication connection may be in an electrical manner, or a mechanical manner or other forms.

Units described as separation components may be or may be not physically separated, and components for unit display may be or may be not physical units, may be located at the same position, or may be distributed in a plurality of network units. Part or all of the units may be selected according to actual demands to achieve purposes of the schemes of the embodiments.

In addition, functional units in the embodiments of this disclosure may be integrated in one processing unit, or independently and physically exist, or two or more units may be integrated in one unit.

When the functions are realized in a form of a software functional unit and serve as independent products to be sold or used, the functions may be stored in a computer-readable storage medium. Based on the understanding, the technical schemes of this disclosure essentially or parts making contribution to the prior art or part of the technical schemes may be embodied in a software product form. The computer software product is stored in a storage medium and includes a plurality of instructions for making a computer device (a personal computer, a server, a network device, or a terminal device, etc.) perform all or part of the steps of the methods in the embodiments of this disclosure. The storage medium includes a U disk, a mobile hard disk, a Read Only Memory (ROM) diskette, a Random Access Memory (RAM) diskette, or a light disk or other media capable of storing program codes.

Terms used in the embodiments of this disclosure are merely used for describing purposes of the specific embodiments rather than limit the present disclosure. A singular form including "one kind", "said" and "the" used in the embodiments and Claims of this disclosure also aim to include a plural form, except the context clearly expresses other meanings.

According to the context, for example, the words "in case" or "if" may be explained as "during" or "when" or "in response to determining" or "in response to detecting". Similarly, according to the context, phrases " in a case that determining" or "in a case that detecting (described conditions or events)" may be explained as "when determining" or "in response to determining" or "when detecting (described conditions or events)" or "in response to detecting (described conditions or events)".

Those ordinarily skilled in the art may understand that all or part of the steps in the above embodiment methods may be finished by instructing related hardware via programs. The programs may be stored in a readable storage medium of a device, and are executed to realize all or part of the steps. The storage medium includes: FLASH, an Electrically Erasable Programmable Read Only Memory (EEPROM), etc.

The above descriptions are merely specific implementation modes of this disclosure, but the scope of protection of this disclosure is not limited thereto; and modifications or substitutions easily thought by those skilled in the technical field within the technical scope disclosed by this disclosure shall fall within the scope of protection of this disclosure. Thus, the scope of protection of this disclosure shall take the scope of protection of the Claims as final.

## Claims

1. A method for competitively accessing a multi-link WLAN network, comprising:
monitoring whether links are idle;
in a case that a first link is idle, performing a random backoff process on the first link after interframe space period, and starting to transmit data on the first link when the backoff process is ended; and
in a case that other links are idle before the first link finishes data transmission, setting Transmit Opportunity (TXOP) of other links according to TXOP of the first link and time when data transmission starts, and transmitting data on other links.

2. The method for competitively accessing the multi-link WLAN network as claimed in claim 1, wherein the step of setting TXOP of other links according to TXOP of the first link and time when data transmission starts, and transmitting data on other links comprises:
monitoring idle state of other links, in a case that other links are kept in an idle state after interframe space period, performing a random backoff process on other links, and in a case that data are transmitted on the first link when the backoff process is ended, setting a TXOP duration on other links as a residual value of a TXOP duration on the first link, and starting data transmission on other links.

3. The method for competitively accessing the multi-link WLAN network as claimed in claim 1, wherein the step of setting TXOP of other links according to TXOP of the first link and time when data transmission starts, and transmitting data on other links comprises:
monitoring idle state of other links, in a case that data are transmitted on the first link after interframe space period, setting a TXOP duration on other links as a residual value of a TXOP duration on the first link, and starting data transmission on other links.

4. The method for competitively accessing the multi-link WLAN network as claimed in claim 1, wherein the step of setting TXOP of other links according to TXOP of the first link and time when data transmission starts, and transmitting data on other links comprises:
in a case that other links perform a random backoff process when the random backoff process of the first link is ended, directly ending the backoff process on other links, setting a TXOP duration on other links to be the same with a TXOP duration on a reference link, and starting data transmission on other links.

5. The method for competitively accessing the multi-link WLAN network as claimed in any one of claims 1-4, wherein a method for setting a TXOP duration on a first link comprises:
setting the TXOP duration on the first link to be a TXOPLimit value, or to be determined by TXOPLimit and a size of a to-be-transmitted data packet.

6. A method for competitively accessing a multi-link WLAN network, comprising:
monitoring whether links are idle;
in a case that a current link is idle, performing a random backoff process on the current link after interframe space period, and starting to transmit data on the current link when the backoff process is ended; and
in a case that other links are idle when the random backoff process of the current link is ended, setting TXOP of other links, and transmitting data on other links.

7. The method for competitively accessing the multi-link WLAN network as claimed in claim 6, wherein the step of setting TXOP of other links, and transmitting data on other links comprises:
in a case that other links perform a random backoff process when the random backoff process of the current link is ended, directly ending the backoff process on other links, setting a TXOP duration on other links to be the same with a TXOP duration on the current link, and starting data transmission on other links.

8. A method for competitively accessing a multi-link WLAN network, comprising:
monitoring whether links are idle; and
in a case that a current link is idle, detecting whether data are transmitted on a first link or not; in a case that yes, setting TXOP of the current link according to TXOP of the first link and time when data transmission starts, and transmitting data on the current link.

9. The method for competitively accessing the multi-link WLAN network as claimed in claim 8, wherein the step of setting TXOP of the current link according to TXOP of the first link and time when data transmission starts, and transmitting data on the current link comprises:
monitoring idle time of the current link, performing a random backoff process on the current link after interframe space period, starting data transmission on the current link when the backoff process is ended, and setting a TXOP duration on the current link as a residual value of a TXOP duration on the first link.

10. The method for competitively accessing the multi-link WLAN network as claimed in claim 8, wherein the step of setting TXOP of the current link according to TXOP of the first link and time when data transmission starts, and transmitting data on the current link comprises:
monitoring idle time of the current link, starting data transmission on the current link after interframe space period, setting a TXOP duration on the current link as a residual value of a TXOP duration on the first link.

11. A device for competitively accessing the multi-link WLAN network, comprising:
a monitor component configured to monitor whether links are idle; and
a synchronization component configured to perform a random backoff process on a first link after interframe space period in a case that the first link is idle, and start data transmission on the first link when the backoff process is ended; and to set TXOP of other links according to TXOP of the first link and time when data transmission starts and transmit data on other links in a case that other links are idle before the first link finishes data transmission.

12. The device for competitively accessing the multi-link WLAN network as claimed in claim 11, wherein the operation that the synchronization component sets TXOP of other links according to TXOP of the first link and time when data transmission starts, and transmits data on other links comprises following one or more of items:
monitoring idle state of other links, in a case that other links are kept in an idle state after interframe space period, performing a random backoff process on other links, and in a case that data are transmitted on the first link when the backoff process is ended, setting a TXOP duration on other links as a residual value of a TXOP duration on the first link, and starting data transmission on other links;
monitoring idle state of other links, in a case that data are transmitted on the first link after interframe space period, setting a TXOP duration on other links as a residual value of a TXOP duration on the first link, and starting data transmission on other links; and
in a case that other links perform the random backoff process when a random backoff process of the first link is ended, directly ending the backoff process on other links, setting a TXOP duration on other links to be the same with a TXOP duration on a reference link, and starting data transmission on other links.

13. A terminal, comprising:
a memory configured to store programs; and
a processor coupled to the memory, wherein the processor is configured to operate the programs so that the terminal can perform a method for competitively accessing a multi-link WLAN network as claimed in any one of claims 1-10.

14. A computer-readable storage medium, comprising computer instructions, wherein when the computer instructions run on a terminal, the terminal can perform a method for competitively accessing a multi-link WLAN network as claimed in any one of claims 1-10.
